(19) Europäisches Patentamt / European Patent Office / Office européen des brevets

(11) **EP 4 745 881 A1**

(12) **DEMANDE DE BREVET EUROPEEN**

(43) Date de publication:
**20.05.2026 Bulletin 2026/21**

(21) Numéro de dépôt: **25215771.4**

(22) Date de dépôt: **14.11.2025**

(51) Classification Internationale des Brevets (IPC):
*G06T 7/00* $^{(2017.01)}$

(52) Classification Coopérative des Brevets (CPC):
**G06T 7/0002;** G01N 23/2251; G06T 2207/10056

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **14.11.2024 FR 2412404**

(71) Demandeur: **Commissariat à l'Energie Atomique et aux Energies Alternatives**
**75015 Paris (FR)**

(72) Inventeur: **GUEDJ, Cyril**
**38054 Grenoble Cedex 9 (FR)**

(74) Mandataire: **Lavoix**
**2, place d'Estienne d'Orves**
**75441 Paris Cedex 09 (FR)**

(54) **PROCÉDÉ ET DISPOSITIF DE TRAITEMENT DE DONNÉES MULTIDIMENSIONNELLES DE MICROSCOPIE REPRÉSENTATIVES D'UN ÉCHANTILLON DE MATÉRIAU POUR CARTOGRAPHIER UN MÉLANGE DE PHASES AMORPHES ET CRISTALLINES DANS L ÉCHANTILLON DE MATÉRIAU**

(57) Ce dispositif de traitement comporte des modules de : débruitage (18) d'un pavé de données multidimensionnelles de microscopie d'entrée par application d'un filtrage, normalisation (20) du pavé de données débruitées pour obtenir un pavé de données normalisées, la normalisation comportant un ajustement d'un contraste local du pavé de données débruitées entre une valeur minimale et une valeur maximale prédéterminées ; lissage (20) du pavé de données débruitées avant ou après normalisation ; en au moins un sous-ensemble de points dudit pavé de données normalisées, calcul d'un tenseur de structure (22) fonction des valeurs de gradients directionnels, autour de chaque point dudit sous-ensemble du pavé données normalisées, et calcul (24) d'au moins une cartographie (25, 27, 29) des phases amorphes et des phases cristallines de l'échantillon de matériau observé en fonction d'au moins une caractéristique des tenseurs de structure calculés.

FIGURE.2

## Description

La présente invention concerne un procédé de traitement de données multidimensionnelles de microscopie représentatives d'un échantillon de matériau pour cartographier un mélange de phases amorphes et cristallines dans ledit échantillon de matériau.

Elle concerne également un dispositif de traitement de données multidimensionnelles représentatives d'un échantillon de matériau pour cartographier un mélange de phases amorphes et cristallines associé et un programme d'ordinateur associé.

L'invention se situe dans le domaine du traitement de données multidimensionnelles, obtenues par observation d'échantillons composés d'un ou plusieurs matériaux, pour l'analyse de leurs propriétés physiques, chimiques et structurelles. L'invention concerne également la métrologie automatisée à partir d'algorithmes spécialisés.

Plus particulièrement, l'invention trouve des applications dans la localisation et la caractérisation structurelle des phases amorphes et cristallines dans des matériaux, par exemple appliquée dans l'inspection de qualité dans une chaîne de production de matériaux et dispositifs.

Dans ce document, les définitions officielles sont celles proposées par l'union internationale de cristallographie (IUCr). Un matériau est un cristal s'il a essentiellement un diagramme de diffraction ponctuel, c'est-à-dire composé de taches de diffraction simplement connexes d'un point de vue topologique. Par contre, un matériau amorphe comporte des anneaux de diffraction, qui ne sont pas des espaces topologiques simplement connexes car les anneaux comportent des trous au voisinage de leur centre. La distinction entre un matériau cristallin et un matériau amorphe n'est pas toujours simple dans le réseau réciproque, car une myriade de nanocristaux d'orientation aléatoire donne un ensemble de taches de diffraction dont la superposition converge vers une forme annulaire quand le nombre de cristaux augmente.

Il est donc utile de disposer d'un outil d'analyse des mélanges de phases amorphes et cristallines d'un matériau dans le réseau direct, et c'est l'objet de cette invention.

En pratique, des matériaux observés comportant une ou plusieurs phases cristallines et/ou amorphes et il est particulièrement utile de localiser avec précision ces phases, et également les quantifier notamment de quantifier la fraction amorphe ou cristalline dans le matériau.

De manière connue, la fraction amorphe ou cristalline d'un matériau joue un rôle déterminant dans le fonctionnement des dispositifs, car les propriétés physiques fondamentales dépendent de l'ordre cristallin. Par exemple il existe une probabilité accrue de courants de fuites au niveau des joints de grains entre 2 cristaux, contrairement au cas de figure d'un matériau amorphe homogène. La physique des dispositifs les plus avancés repose sur l'ingénierie des matériaux et interfaces, il est donc fondamental de mesurer et positionner précisément l'ordre cristallin, à partir de mesures d'imageries telle que la microscopie électronique en transmission.

Il est utile de disposer d'outils performants pour réaliser l'inspection de matériaux, et cartographier la présence et la structure des phases présentes dans l'échantillon, en phase de calibration ou en phase d'optimisation technologique de divers dispositifs utilisant les matériaux.

L'analyse de la cristallinité, de l'amorphicité, de la cohérence et de l'orientation des phases par traitement de données de spectres (1D) et d'images (2D) obtenues par microscopie a été développée à cet effet. La méthodologie présentée ici est également valable dans les hyperespaces de dimension >3. Par définition, l'amorphicité est la teneur relative en phase amorphe d'un mélange de phases amorphes et cristallines. La cristallinité est la teneur relative en phase cristalline du mélange. Les définitions mathématiques de l'énergie, la cohérence et l'orientation classiquement utilisées dans le domaine des tenseurs de structure seront fournies ci-dessous à titre de rappel.

Les images et spectres sont par exemple obtenus par microscopie électronique en transmission à haute résolution (HRTEM et HRSTEM et 4D-STEM), décrites par de nombreux acronymes tels que HRSTEM-HAADF, HRSTEM-BF, HRSTEM-DF, HRSTEM-ABF, HRSTEM-MAADF, HRSTEM-LAADF, HRSTEM-VLAADF, LABF, MABF, HABF, iDPC, NCSI, ISTEM, etc., des images TEM provenant d'un détecteur customisé, physique ou numérique, la microscopie de fluorescence X (HRSTEM-EDX ou EDS ou WDS ou WDX), microscopie de perte d'énergie électronique (HRSTEM-EELS et HRSTEM-VEELS), microscopie électronique en transmission filtrée en énergie (EF-HRTEM, EF-HRSTEM), microscopie à force atomique (AFM), microscopie à effet tunnel (STM), sonde atomique tomographique ou tomographie électronique ou les éventuelles futures variantes à base de positrons ou autres particules par exemple. D'autres types de microscopies utilisant des particules chargées sont également concernées par ce brevet, qui incluent des faisceaux d'ions et d'électrons et/ou de positrons. Pour obtenir l'ordre structural, les images de microscopie obtenues sont des images à résolution atomique, c'est-à-dire de résolution spatiale inférieure ou égale à 2 nanomètres. La méthode peut également s'appliquer à toute autre technique connue de l'homme de métier permettant d'obtenir une résolution atomique, permettant de relier la donnée à la position des atomes dans l'échantillon par l'intermédiaire d'une simulation physique qui intègre les paramètres instrumentaux.

Des ensembles de données de spectres et d'images représentatives chacune d'au moins une partie de l'échantillon observé sont obtenues par tout type de caractérisations par microscopie générant un pavé de données à N dimensions (ou données multidimensionnelles), N étant un entier supérieur ou égal à 2, également appelé « datacube ». Ce pavé comporte des gouttes, également appelées taches ou spots, ou « spikes » ou « blobs » en anglais, qui se détachent sur un fond homogène (par exemple des gouttes ou taches claires sur fond homogène sombre). Ces gouttes sont représentatives de caractéristiques structurelles du matériau de l'échantillon observé, par exemple d'un alignement d'atomes le long de la direction d'observation. Le pavé de données peut également contenir du bruit. Le contraste du pavé de données peut être relié à la chimie de l'échantillon par l'intermédiaire de simulations incluant les paramètres instrumentaux.

Par exemple, s'agissant de l'observation de cristaux, des gouttes disposées selon un motif régulier représentent classiquement le maillage cristallin. Le modèle atomique le plus simple est un modèle de sphères dures, qui représente la nature particulaire d'un atome. Les microscopes les plus performants permettent de visualiser les atomes, qui se présentent généralement sous l'image d'une goutte. En deux dimensions, les gouttes sont également appelées taches. En une dimension, les gouttes sont des points. Entre les gouttes se trouvent des signaux et des interférences complexes qui proviennent de la nature essentiellement ondulatoire de la matière et de la lumière.

Mathématiquement, une goutte est une composante simplement connexe d'un espace topologique discret, au sens de la topologie générale. Cela signifie que tout lacet tracé dans une goutte peut être réduit par homotopie à un point. Physiquement, une goutte représente par exemple le signal électrique produit par les pixels d'un détecteur matriciel suite à l'impact d'une particule (électron, photon, ion, fermions, etc.). La particule est toujours beaucoup plus petite que le pixel, donc la goutte peut toujours se réduire à un point par homotopie, conformément à la définition mathématique de la goutte. Il existe donc un accord précis entre la définition physique et la définition mathématique de la goutte.

Dans l'état de la technique, on connaît des méthodes de mesure des phases cristallines par diffraction électronique, par exemple : « N. Daghbouj et al., Journal of Nuclear Materials 584 (2023) 154543, https://doi.org/10.1016/j.jnucmat.2023.154543 » . La résolution de cette technique de cartographie ACOM-TEM (Nanomegas ASTAR) a une résolution spatiale typique de 2 nm au mieux, tout comme la méthode de déconvolution des diagrammes de diffraction électronique de la publication « B. Putz et al., Materials & Design 218 (2022) 110675, https://doi.org/10.1016/j.matdes.2022.110675 ». Il existe d'autres méthodes de quantification de la fraction de phase amorphe pour des applications pharmaceutiques telles que la chromatographie, mais la résolution spatiale est généralement de l'ordre du micromètre.

Un inconvénient potentiel de ces techniques est qu'il n'a pas de résolution atomique, et les mesures sont longues puisqu'il faut obtenir un diagramme de diffraction par point de mesure pour cartographier l'échantillon, ce qui représente un très grand nombre de diagrammes de diffraction. L'échantillon est donc susceptible de se déplacer par dérive et de se transformer sous l'action du faisceau d'électrons de la mesure. La réduction électrochimique ou la formation de nanocristaux à partir d'une phase amorphe a déjà été observée, causée par les effets de l'irradiation électronique durant la mesure. L'échantillon peut donc se dégrader sous faisceau, ce qui génère des artéfacts dans l'interprétation. En outre, ces méthodes ne permettent pas d'obtenir la cohérence et l'orientation des phases à partir d'une seule image obtenue dans le réseau réel.

L'évolution des nœuds technologiques les plus avancés de l'ITRS (International Technology Roadmap for Semiconductors) engendre le besoin de localiser et de caractériser la structure des régions amorphes ou cristallines avec une résolution spatiale atomique, afin de mieux comprendre et optimiser les procédés d'élaboration, ainsi que les performances et la fiabilité qui en résulte.

A cet effet, l'invention a pour objet un procédé de traitement de données multidimensionnelles de microscopie représentatives d'un échantillon de matériau pour cartographier un mélange de phases amorphes et cristallines dans ledit échantillon de matériau, comportant une obtention d'au moins une image de microscopie formant un pavé de données d'entrée, la ou chaque image dudit pavé de données d'entrée étant représentative d'une partie dudit l'échantillon, ledit pavé de données d'entrée étant représenté dans un espace à N dimensions, N étant supérieur ou égal à deux, chaque donnée dudit pavé correspondant à un point de l'espace à N dimensions.

Ce procédé comporte des étapes, mises en œuvre par un processeur d'un dispositif électronique programmable, de :

- débruitage du pavé de données d'entrée par application d'un filtrage audit pavé de données d'entrée pour obtenir un pavé de données débruitées,
- normalisation du pavé de données débruitées pour obtenir un pavé de données normalisées, la normalisation comportant un ajustement d'un contraste local du pavé de données débruitées entre une valeur minimale et une valeur maximale prédéterminées ;

- lissage du pavé de données débruitées avant ou après normalisation,
- en au moins un sous-ensemble de points dudit pavé de données normalisées, calcul d'un tenseur de structure fonction des valeurs de gradients directionnels, autour de chaque point dudit sous-ensemble du pavé données normalisées,
- calcul d'au moins une cartographie des phases amorphes et des phases cristallines de l'échantillon de matériau observé en fonction d'au moins une caractéristique des tenseurs de structure calculés.

Avantageusement, le procédé proposé permet une localisation avec une précision à l'échelle atomique, et fonctionne avec des technologies d'acquisition rapides puisqu'une seule image de plein champ suffit pour obtenir le résultat. Cette méthodologie est fiable, déterministe, frugale et rapide par rapport à d'autres méthodes, par exemple aux méthodes d'intelligence artificielle généralement beaucoup plus coûteuses en temps de calcul.

Le procédé de traitement de données multidimensionnelles représentatives d'un échantillon de matériau pour cartographier un mélange de phases amorphes et cristallines selon l'invention peut également présenter une ou plusieurs des caractéristiques ci-dessous, prises indépendamment ou selon toutes les combinaisons techniquement envisageables.

Le calcul d'au moins une cartographie comporte un calcul d'une valeur d'énergie du tenseur de structure en chaque point dudit sous-ensemble du pavé de données normalisées, lesdites valeurs d'énergie du tenseur de structure formant une cartographie d'énergie.

Le calcul d'au moins une cartographie comporte un calcul d'une valeur de cohérence du tenseur de structure en chaque point dudit sous-ensemble du pavé données normalisées, et une formation d'une cartographie de cohérence structurelle de l'échantillon observé.

Le calcul d'au moins une cartographie comporte un calcul d'une valeur d'orientation en chaque point à partir du tenseur de structure associé audit point, l'orientation étant calculée à partir de composantes dudit tenseur de structure et une formation d'une cartographie d'orientations structurelles de l'échantillon observé.

Le procédé comporte en outre une évaluation quantitative d'une teneur de phase(s) amorphe(s) et/ou cristallines dans au moins une partie de l'échantillon observé, comportant un calcul d'un paramètre statistique à partir du pavé de données normalisées lissées ou à partir d'au moins une des cartographies des phases amorphes et des phases cristallines de l'échantillon de matériau observé, et une extraction d'une valeur de la teneur en phases amorphes de l'échantillon de matériau observé en fonction d'une courbe de calibration bijective, qui met en relation bijective le paramètre statistique calculé et I la teneur en phase amorphe du matériau observé.

Le paramètre statistique est choisi parmi les paramètres statistiques suivants: {mode, médiane, écart-type}.

Lesdites courbes de calibration bijective sont calculées et mémorisées préalablement.

Le calcul d'au moins une cartographie comporte le calcul d'une valeur d'énergie et le calcul d'une valeur de cohérence et le calcul d'une valeur d'orientation du tenseur de structure en chaque point dudit sous-ensemble du pavé de données normalisées, le procédé comportant en outre une représentation des valeurs d'énergie, de cohérence et d'orientation calculées par une image représentée en mode « Teinte Saturation Luminosité », dans laquelle les valeurs de teinte sont les valeurs d'orientation calculées, les valeurs de saturation sont les valeurs de cohérence calculées et les valeurs de luminosité sont les valeurs d'énergie calculées.

L'étape de débruitage comporte l'application d'un filtrage à noyau de taille prédéterminée.

Le filtrage à noyau comporte une convolution par un filtre HBSG de noyau carré L'invention concerne également un programme d'ordinateur comportant des instructions logicielles qui, lorsqu'elles sont exécutées par un ordinateur, mettent en œuvre un procédé de données multidimensionnelles représentatives d'un échantillon de matériau pour cartographier un mélange de phases amorphes et cristallines tel que défini ci-dessus.

L'invention concerne également un dispositif de données multidimensionnelles représentatives d'un échantillon de matériau pour cartographier un mélange de phases amorphes et cristallines dans ledit échantillon de matériau pour cartographier un mélange de phases amorphes et cristallines dans ledit échantillon de matériau, configuré pour mettre en œuvre un module d'obtention d'au moins une image de microscopie formant un pavé de données d'entrée, la ou chaque image dudit pavé de données d'entrée étant représentative d'une partie dudit l'échantillon, ledit pavé de données d'entrée étant représenté dans un espace à N dimensions, N étant supérieur ou égal à deux, chaque donnée dudit pavé correspondant à un point de l'espace à N dimensions. Ce dispositif est un dispositif électronique programmable comportant un processeur configuré pour exécuter :

- un module de débruitage du pavé de données d'entrée par application d'un filtrage audit pavé de données d'entrée pour obtenir un pavé de données débruitées,
- un module de normalisation du pavé de données débruitées pour obtenir un pavé de données normalisées, la normalisation comportant un ajustement d'un contraste local du pavé de données débruitées entre une valeur minimale et une valeur maximale prédéterminées ;
- un module de lissage du pavé de données débruitées avant ou après normalisation,
- en au moins un sous-ensemble de points dudit pavé de données normalisées, un module de calcul d'un tenseur de structure fonction des valeurs de gradients directionnels, autour de chaque point dudit sous-ensemble du pavé données normalisées,
- -un module de calcul d'au moins une cartographie des phases amorphes et des phases cristallines de l'échantillon de matériau observé en fonction d'au moins une caractéristique des tenseurs de structure calculés.

L'invention apparaîtra plus clairement à la lecture de la description qui va suivre, donnée uniquement à titre d'exemple non limitatif, et faite en référence aux dessins dans lesquels :

la figure 1 est un schéma-bloc d'un système d'inspection de données multidimensionnelles de microscopie comportant un dispositif de traitement de données multidimensionnelles de microscopie pour cartographier un mélange de phases amorphes et cristallines selon un mode de réalisation ;

la figure 2 est un synoptique des principales étapes d'un procédé de traitement de données multidimensionnelles de microscopie pour cartographier un mélange de phases amorphes et cristallines selon un mode de réalisation ;

la figure 3 illustre une série d'images d'entrée $I_1$ à $I_8$ dans un cas d'application ;

la figure 4 illustre des images débruitées correspondant aux images d'entrée de la figure 3 ;

la figure 5 illustre des images débruitées puis normalisées correspondant aux images d'entrée de la figure 3 ;

la figure 6 illustre des cartographies d'amorphicité calculées, correspondant aux images d'entrée de la figure 3 ;

la figure 7 illustre une courbe de l'écart-type d'énergie en fonction d'une fraction amorphe pour un exemple de matériau ;

la figure 8 illustre des cartographies de cohérence structurelle, correspondant aux images d'entrée de la figure 3 ;

la figure 9 illustre des cartographies complètes comprenant l'orientation structurelle, correspondant aux images d'entrée de la figure 3.

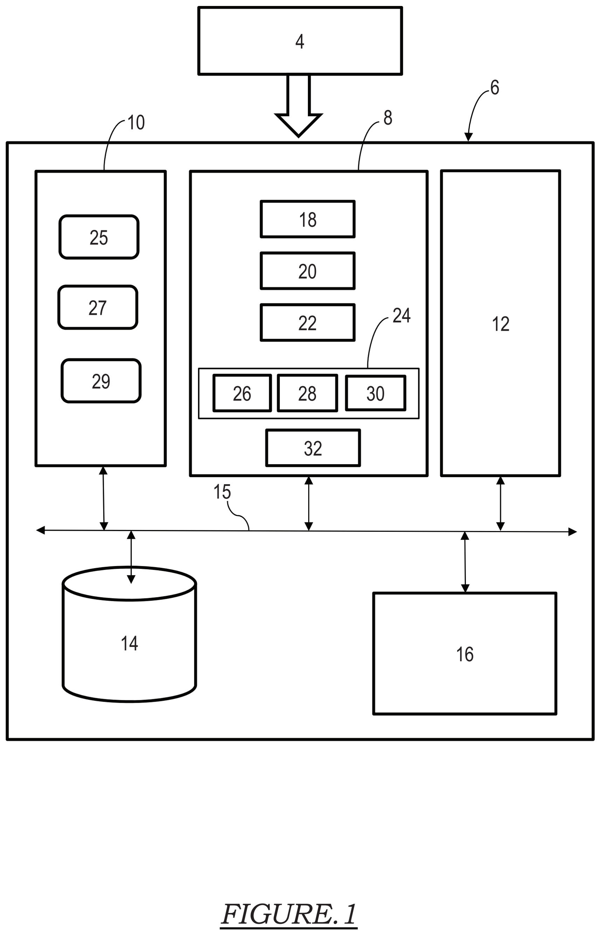

La **figure 1** illustre schématiquement un système d'inspection de données multidimensionnelles de microscopie 2, comportant un dispositif de traitement de données multidimensionnelles de microscopie, acquises par une machine de caractérisation 4, pour cartographier un mélange de phases amorphes et cristallines dans un échantillon de matériau.

Toute technique de microscopie adaptée pour la caractérisation d'un tel échantillon est applicable, avec une résolution spatiale atomique permettant de distinguer la structure cristalline et la structure amorphe.

Par exemple, la technologie utilisée est la microscopie électronique en transmission à haute résolution (grossissement supérieur à 1 million) permet de bien voir des différences entre les phases amorphes et cristallines quand la préparation d'échantillon et les réglages de la machine sont corrects.

Dans un mode de réalisation, la machine de caractérisation 4 est donc un microscope électronique en transmission (MET) qui permet d'acquérir des images d'un échantillon composé d'un ou plusieurs matériaux, comportant par exemple des phases cristallines et d'autres phases amorphes.

Le microscope électronique 4 permet d'acquérir simultanément des images de diffraction électronique, des spectres EELS (pour « Electron Energy Loss Spectroscopy »), des spectres EDX (pour « Energy Dispersive X-Ray Analysis ») des signaux de différents capteurs (BF pour « Bright field », DF pour « Dark field », DPC pour « Differential phase contrast » ou tout autre capteur adapté ou customisé), pour chaque point de l'échantillon en mode de microscopie à balayage appelé mode STEM (pour « Scanning Transmission Electron Microscope »). Un autre mode d'acquisition possible est le mode TEM qui permet d'obtenir une image globale sans avoir à balayer le faisceau d'électrons.

Dans d'autres modes de réalisations, la machine de caractérisation 4 est un microscope de type sonde (AFM, STM, KFM) ou tout imageur de résolution spatiale atomique connu de l'homme du métier où le contraste peut être relié à la position réelle des atomes via une simulation physique qui intègre les paramètres instrumentaux.

Chaque spectre ou image acquis est représenté sous forme d'image numérique, comportant des points ou pixels, chaque image étant représentative d'au moins une partie de l'échantillon observé.

L'ensemble des spectres et images acquis forme un pavé de données à N dimensions, N étant un entier naturel supérieur ou égal à 2. Un tel pavé de données est également appelé « datacube ».

Dans un mode de réalisation, plusieurs spectres ou images sont acquis dans le temps, montrant une évolution de l'échantillon lors de l'analyse. Dans ce mode de réalisation, le temps est une dimension supplémentaire du pavé de données.

En complément, une autre dimension du pavé de données est la focalisation du microscope, l'énergie des électrons, un angle (de l'échantillon, de collection des électrons, de convergence de électrons), ou tout autre paramètre de réglage de la machine de caractérisation susceptible de varier de manière contrôlée durant la mesure.

Les données incomplètes peuvent éventuellement être extrapolées à partir des valeurs voisines le cas échéant, par exemple pour corriger les éventuelles imperfections rencontrés durant l'acquisition de données. En règle générale les mesures à l'échelle atomique sont très souvent entachées de défauts car un simple bruit acoustique ou électronique peut parfois les perturber.

Dans un pavé de données multidimensionnelles d'un échantillon cristallin, la maille forme usuellement un réseau régulier de gouttes représentatives de l'agencement des atomes. Les simulations permettent de prédire quel seront les pavés de données attendus pour un matériau donné et pour un réglage particulier de la machine de caractérisation.

Un pavé de données multidimensionnelles d'un échantillon observé est transmis à un dispositif 6 de traitement de données multidimensionnelles de microscopie pour la cartographie des phases amorphes ou cristallines de l'échantillon.

Par exemple, la transmission est effectuée par une liaison filaire ou par liaison sans fil (optique, radio, ou autre).

Le dispositif 6 de traitement est, dans un mode de réalisation, un dispositif électronique programmable, e.g. un ordinateur.

Le dispositif 6 comporte un processeur 8 (CPU ou GPU ou TPU ou APU ou DPS ou FPGA ou NPU ou MCU ) associé à une mémoire électronique 10 de type RAM ou ROM ou EEPROM ou flash ou SRAM ou DRAM ou VRAM ou NVRAM ou MRAM ou Optane ou PCRAM ou FeRAM ou ReRAM ou NVDIMM ou XPoint ou toutes celles connues par l'homme de l'art. Optionnellement, le dispositif 6 comporte une interface homme-machine 12, ou une interface IA-machine 12, comportant notamment un écran ou tout système d'affichage de données. En outre le dispositif 6 comporte ou est connecté à une mémoire de stockage 14, et une interface de communication réseau 16. Les éléments 8, 10, 12, 14, 16 du dispositif 6 sont adaptés pour communiquer via un bus de communication 15.

La mémoire de stockage 14 est notamment configurée pour mémoriser une base de connaissances, qui capitalise toutes des données existantes sur les mélanges cristallins/amorphes pour différents matériaux.

Le processeur 8 est configuré pour exécuter des modules décrits ci-après, mémorisés dans la mémoire électronique 10, pour mettre en œuvre un procédé de traitement de données multidimensionnelles de microscopie pour cartographier un mélange de phases amorphes et cristallines dans un échantillon de matériau observé.

Le module 18 est un module d'obtention de pavé de données multidimensionnelles à traiter, configuré pour obtenir un pavé de données d'entrée comportant au moins une image d'entrée, également appelée image de microscopie, acquise par une machine de caractérisation telle que décrite ci-dessus.

Par exemple, le module d'obtention 18 est configuré pour obtenir le pavé de données d'entrée à partir d'une mémoire électronique où ces données multidimensionnelles ont été mémorisées après acquisition par la machine de caractérisation.

De plus, le module 18 est configuré pour débruiter le pavé de données d'entrée par application d'un filtrage ou toute autre technique de débruitage connue par l'homme du métier, pour obtenir un pavé de données débruitées.

Le module 20 est un module de normalisation, configuré pour mettre en œuvre une normalisation du pavé de données débruitées pour obtenir un pavé de données normalisées, la normalisation comportant un ajustement du contraste local du pavé de données débruitées entre une valeur minimale et une valeur maximale prédéterminées.

De plus le module 20 est configuré pour effectuer un lissage du pavé de données débruitées avant ou après normalisation. Le module 20 réalise alors une fonction de module de lissage, permettant d'éliminer, le cas échéant, des données qui s'écartent d'une distribution optimale par une interpolation entre points adjacents.

Le module 22 est un module de calcul d'un tenseur de structure pour chaque point d'au moins un sous-ensemble de points du pavé de données normalisées.

Le module 24 est un module de calcul d'au moins une cartographie des phases amorphes et des phases cristallines de l'échantillon de matériau observé en fonction d'au moins une caractéristique des tenseurs de structure calculés.

Selon les modes de réalisation, le module 24 comporte un ou plusieurs des modules suivants :

- un module 26 de calcul d'une valeur d'énergie du tenseur de structure en chaque point dudit sous-ensemble du pavé données normalisées, les valeur d'énergie du tenseur de structure formant une cartographie d'énergie 25 représentative qualitativement des phases amorphes et/ou cristallines de l'échantillon de matériau observé ;
- un module 28 de calcul d'une valeur de cohérence du tenseur de structure en chaque point dudit sous-ensemble du pavé données normalisées, et de formation d'une cartographie 27 de cohérence structurelle de l'échantillon observé et
- un module 30 de calcul d'une valeur d'orientation en chaque point à partir du tenseur de structure associé au point, l'orientation étant calculée à partir de composantes dudit tenseur de structure et une formation d'une cartographie 29 d'orientations structurelles de l'échantillon observé ;
- un module 32 d'évaluation d'une teneur en phases amorphes et/ou en phases cristallines du matériau observé.

Les cartographies 25, 27, 29 sont par exemple mémorisées dans la mémoire électronique 10 et/ou affichées sur l'interface homme-machine ou IA/machine 12 et/ou transmises à une application externe via l'interface de communication 16.

Dans un mode de réalisation, les modules 18, 20, 22, 24, 26, 28, 30, 32 sont réalisés chacun sous forme d'un logiciel, et forment un programme d'ordinateur, comportant des instructions logicielles qui, lorsqu'elles sont exécutées par un ordinateur, mettent en œuvre un procédé de traitement de données multidimensionnelles représentatives d'un échantillon de matériau pour cartographier un mélange de phases amorphes et cristallines dans l'échantillon, tel que décrit plus en détail ci-après.

En variante non représentée, les modules 18, 20, 22, 24, 26, 28, 30, 32 sont réalisés chacun sous forme d'un composant logique programmable, tel qu'un FPGA (de l'anglais *Field Programmable Gate Array*), un GPU (processeur graphique) ou un GPGPU (de l'anglais *General-purpose processing on graphics processing*), un TPU (tensor processing unit) un APU (accelerated processing unit) un DPS (data processing system) un NPU (neural processing unit) un MCU (microcontroleur) ou encore sous forme d'un circuit intégré dédié, tel qu'un ASIC (de l'anglais *Application Specific Integrated Circuit*).

Le logiciel de traitement de données multidimensionnelles pour la localisation de phases amorphes ou cristallines est en outre apte à être enregistré, sous forme de programme d'ordinateur comportant des instructions logicielles, sur un support, non représenté, lisible par ordinateur. Le support lisible par ordinateur est par exemple, un médium apte à mémoriser les instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple EPROM, EEPROM, FLASH, SD, NVRAM, RRAM, PCRAM, NAND 2D, NAND 3D, SLC NAND, MLC NAND, TLC NAND, V-NAND, QLC, SRAM, DRAM, VRAM, NVRAM, MRAM, Optane, PCRAM, FeRAM, ReRAM, NVDIMM, XPoint), une carte magnétique ou une carte optique, un disque SSD ou tout type de mémoire connu de l'homme du métier.

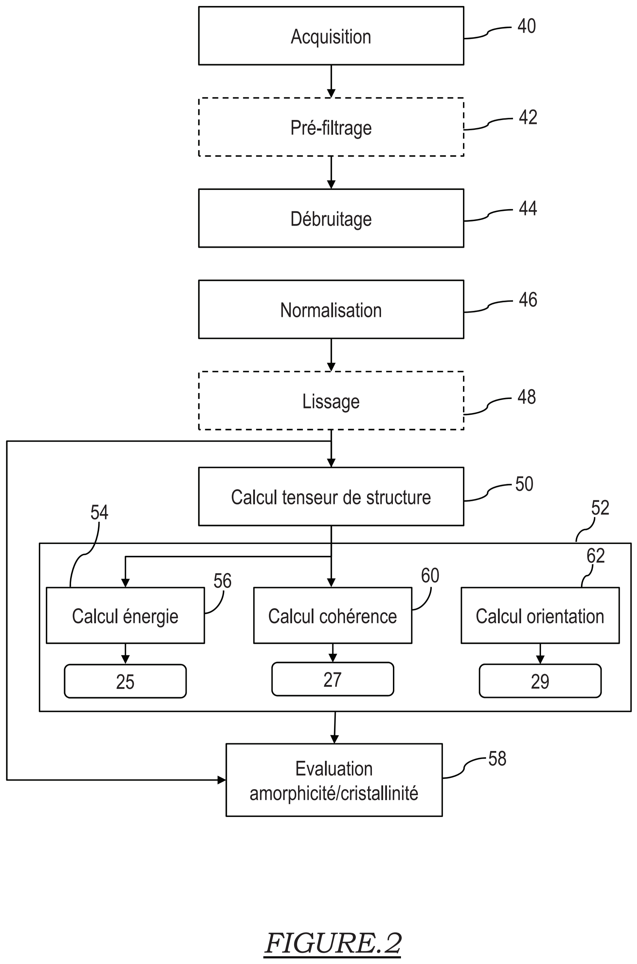

La **figure 2** est un synoptique des principales étapes d'un procédé de traitement de données multidimensionnelles de microscopie représentatives d'un échantillon de matériau pour cartographier un mélange de phases amorphes et cristallines dans ledit échantillon de matériau selon un mode de réalisation.

Le procédé comporte une étape 40 d'obtention (ou acquisition) d'un pavé de données d'entrée à traiter, comportant au moins une image, représentant l'échantillon à inspecter. Le pavé de données d'entrée est acquis par une machine de caractérisation 4 décrite ci-dessus, et temporairement mémorisé ou transmis au dispositif électronique programmable qui met en œuvre les étapes du procédé de traitement décrit ci-après.

D'une manière générale, le pavé de données d'entrée est un pavé à N dimensions, N supérieur ou égal à 2.

Les données du pavé sont des valeurs numériques, chaque valeur étant associée à un point dans l'espace à N dimensions. Un tel point est également appelé pixel lorsque N=2 ou voxel quand N=3. Chaque point a une coordonnée associée dans chaque dimension, en général représentée par un indice.

Dans un mode de réalisation, N=2, le pavé de données d'entrée étant alors une matrice LxW (i.e. L lignes et W colonnes), composée de valeurs de pixels, chaque pixel ayant des coordonnées respectives $(x,y)$, $x$ étant par exemple un indice de ligne et $y$ un indice de colonne.

Optionnellement, le procédé comprend l'étape 42 de préfiltrage, en fonction de connaissances préalables, par exemple en utilisant la base de connaissances mémorisée, pour obtenir un pavé de données d'entrée correspondant à un élément chimique ou à un mélange d'éléments chimiques prédéterminé.

Par exemple en filtrant les images en fonction de la perte d'énergie des électrons, il est possible de sélectionner uniquement le signal provenant d'un ou plusieurs élément(s)chimique(s) particulier(s), par exemple en mode EF-HRTEM ou EF-HRSTEM ou HRSTEM-EDX. Toutes les données du pavé de données ne correspondant pas à l'élément chimique sélectionné sont remplacées par zéro. Le pavé de données obtenu contient alors uniquement le signal généré par l'élément ou les éléments chimiques sélectionné(s) par la fenêtre en énergie. En l'absence des éléments chimiques sélectionnés, le signal est remplacé par la valeur zéro. Dans ce cas, le traitement proposé dans le brevet permet de cartographier les phases amorphes et cristallines provenant sélectivement de l'élément ou des éléments chimiques choisi(s), ce qui constitue un sous-réseau chimique dans la matrice du matériau initial, par exemple le sous-réseau des atomes d'aluminium dans une matrice d'alliage cuivre-aluminium.

Le procédé comprend une étape 44 de débruitage du pavé de données d'entrée par application d'un filtrage au pavé de données d'entrée pour obtenir un pavé de données débruitées. L'étape 44 de débruitage a pour fonction d'enlever les principaux artéfacts expérimentaux, tels que le bruit engendré par exemple par les rayons cosmiques.

De préférence, l'étape 44 met en œuvre un filtrage par convolution avec un noyau HBSG (pour « Half Ball Savitzky-Golay ») tel que décrit dans la demande de brevet FR3 118 256 (« FILTRE DE TRAITEMENT D'IMAGE POUR LA LOCALISATION DE GOUTTES DANS UNE IMAGE MULTIDIMENSIONNELLE ET PROCÉDÉ DE TRAITEMENT D'IMAGE ASSOCIÉ »).

Ce filtrage par exemple utilise un noyau HBSG carré de taille correspondant à la médiane des distances entre gouttes voisines, avec un lissage d'ordre 2 ou 3. Plus ce noyau est petit, plus il conserve les détails les plus fins, donc la taille est choisie pour s'adapter à la finesse des détails recherchés. En contrepartie une taille trop petite élimine moins de bruit.

Selon des variantes, d'autres méthodes connues de l'homme du métier pour le débruitage des images brutes sont applicables.

Le procédé comprend ensuite une étape 46 de normalisation du pavé de données débruitées, permettant d'obtenir un pavé de données normalisées. La normalisation 46 comporte un ajustement du contraste local du pavé de données débruitées entre une valeur minimale et une valeur maximale prédéterminées.

L'étape de normalisation 46 comporte notamment un ajustement (ou normalisation) du contraste local du pavé de données entre une valeur minimale $I_{min}$ et une valeur maximale $I_{max}$ choisies dans la plage de valeurs possible, la valeur minimale $I_{min}$ étant par convention strictement inférieure à la valeur maximale $I_{max}$. Par exemple, pour un pavé de données comportant des valeurs codées sur 16 bits, le contraste maximal est réalisé pour $I_{min}=0$ et $I_{max}=2^{16}-1$. L'homme du métier peut aisément calculer la plage de contraste maximal pour chaque type d'image. Pour réaliser un tel ajustement, une opération d'homothétie sur les valeurs numériques (ou intensités) de chaque point du pavé de données est appliquée.

Une large palette de stratégie de normalisations est connue de l'homme du métier, comme par exemple la soustraction de l'image par la moyenne locale de l'image, le tout divisé par la variance locale de l'image. La moyenne locale peut être par exemple calculée au moyen d'un floutage gaussien, comme expliqué dans la référence suivante : D. Sage, M. Unser, Easy Java Programming for Teaching Image Processing Proceedings of the IEEE International Conference on Image Processing (ICIP'01), Thessaloniki, Hellenic Republic, 2001. Cette technique de normalisation locale « Sage » permet de corriger les effets d'ombrages.

Des artéfacts expérimentaux peuvent être corrigés à ce niveau si besoin par des techniques de correction classiquement utilisées en analyse d'image et vision par ordinateur, telles que la soustraction du fond continu par exemple, pour corriger des artéfacts de fluctuation d'épaisseurs provenant de la préparation d'échantillons.

Le procédé comporte en outre une étape 48 de lissage.

Le lissage consiste à enlever les points physiquement aberrants et les remplacer par une interpolation entre valeurs voisines. Par exemple, si un point donne une intensité infinie (NAN), suite à un parasite électrique dans le réseau ou un rayon cosmique particulièrement énergétique alors le pixel du pavé de données doit être remplacé par une interpolation des valeurs des pixels voisins. Ce lissage 48 a donc pour vocation de lisser la distribution d'intensité du pavé de données, pour la rapprocher de la distribution attendue par les simulations atomistiques, dite distribution optimale. Les points les plus écartés de la distribution optimale sont supprimés, en fonction d'un seuil de tolérance choisi. Ce lissage permet par exemple de conserver uniquement les points situés à +ou - 5 fois l'écart-type de la distribution autour de l'intensité moyenne. Ce lissage permet également de corriger les éventuels défauts dans la chaîne d'acquisition instrumentale. Cette étape de lissage peut aussi s'effectuer entre 40 et 42 ou entre 42 et 44 ou entre 44 et 46. Ce lissage remodèle la distribution des intensités pour la rapprocher de l'idéalité prédite par les simulations.

Optionnellement, le procédé peut comporter des étapes supplémentaires.

Le procédé comprend une étape 50 de calcul de tenseurs de structure en au moins un sous-ensemble de points P du pavé de données normalisées, chaque point P ayant N coordonnées [x,y,...] dans une représentation en N dimensions (ou hyperespace à N dimensions) et ayant une valeur d'intensité associée. Le pavé de données normalisées est défini par les valeurs d'intensité en chaque point de l'hyperespace. Le calcul d'un tenseur de structure est effectué en fonction des valeurs de gradients directionnels, chaque direction correspondant à une dimension de l'hyperespace à N dimensions.

En géométrie différentielle, le tenseur de structure ou matrice des seconds moments est classiquement défini par une matrice dérivée du gradient d'une fonction, décrivant la distribution du gradient dans un voisinage spécifiée autour d'un point. Le gradient est orienté vers la direction de la plus grande variation du champ scalaire. Le tenseur de structure est utilisé en traitement d'images et permet d'analyser l'anisotropie locale autour d'un point donné en estimant les directions prédominantes du gradient au voisinage de ce point.

Le champ de tenseurs de structure d'une image est généralement défini comme le champ des matrices de covariances locales des dérivées premières partielles de cette image. Il est construit à partir des champs de gradients $VI=[Ix, Iy, ..]$ préalablement estimés par convolution linéaire: $Ix = I * Dx$, $Iy= Dy$, ... où le symbole « * » désigne l'opération de convolution et Dx, Dy , .. sont des filtres dérivatifs, généralement à réponse impulsionnelle finie.

Le champ de tenseur de structure noté S:

$$S=\begin{bmatrix} Sxx & Sxy & .. \\ Sxy & Syy & .. \\ .. & .. & .. \end{bmatrix}$$

est calculé par convolution spatiale : $S=W* \nabla|\nabla|^t$
où la lettre t désigne la transposée.

Cette formule générale conduit pour N=2 à la formule :

$$S=\begin{bmatrix} W * I_x^2 & W * I_xI_y \\ W * I_xI_y & W * I_y^2 \end{bmatrix}$$

Avec W un noyau de pondération, généralement gaussien, qui permet de rendre le tenseur de structure plus robuste au bruit.

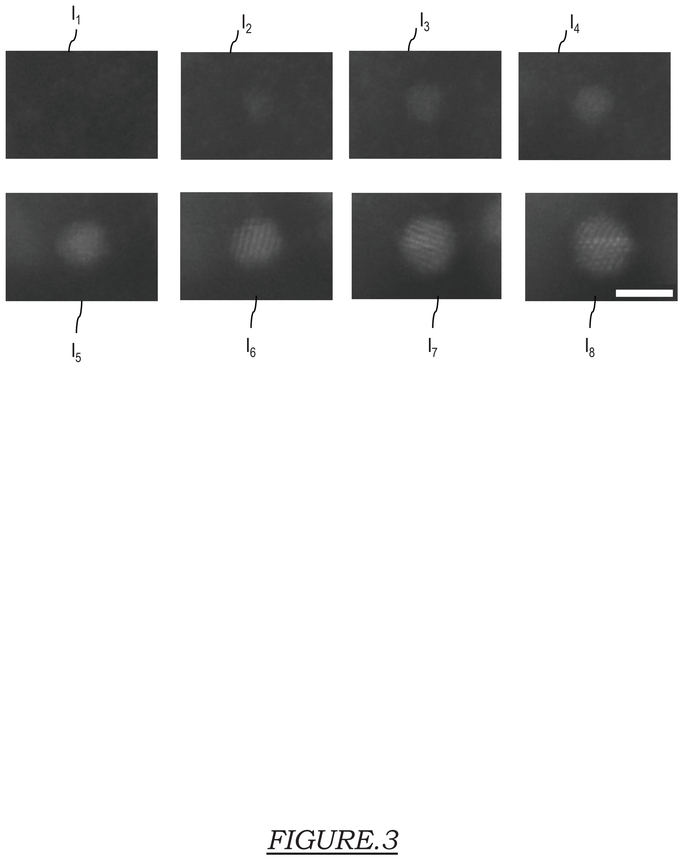

Le choix de l'extension spatiale de ce lissage est donc déterminant pour obtenir le meilleur compromis entre précision et robustesse au bruit. Dans le cas de l'exemple de la figure 3, une taille pour W de 8x8 pixels[2] est choisie, correspondant à une valeur proche de 0,4xMed, où Med est la médiane des distances entre gouttes proches voisines.

Le champ de tenseurs de structure a généralement la même taille que le pavé de données, sauf pour les bords où le calcul par convolution n'est pas possible. Il s'agit d'un champ à valeurs matricielles.

Ainsi, dans un mode de réalisation, le sous-ensemble de points P est par exemple le sous-ensemble de points qui contient tous les points P du pavé de données normalisées pour lesquels le calcul de tenseur de structure est possible (i.e calcul par convolution possible).

La généralisation aux hyperespaces à N dimensions, avec N supérieur ou égal à 3 se calcule aisément à partir des formules explicitées ci-dessus.

Par exemple, dans un mode de réalisation, les filtres dérivatifs sont obtenus par calcul de gradients directionnels, selon chacune des dimensions de l'espace.

Le tenseur de structure est alors défini avec les valeurs des gradients directionnels dans chaque direction de l'hyperespace.

Le voisinage de points pris en considération est par exemple défini par un nombre $N_0$ de points voisins autour du point P considéré dans chaque direction.

Par exemple, $N_0$ est choisi en fonction de la distance minimale entre deux gouttes voisines dans le pavé de données normalisées.

Dans un mode de réalisation, $N_0$ est compris entre un dixième et dix fois la distance médiane entre gouttes voisines du pavé de données normalisées.

Le procédé comporte également une étape 52 de cartographie des phases amorphes et cristallines du matériau observé à partir de caractéristiques des tenseurs de structure en chaque point P.

L'étape 52 comporte au moins une des étapes suivantes : calcul 56 d'une cartographie d'énergie calcul 60 d'une cartographie de cohérence structurelle et calcul 62 d'une cartographie d'orientations structurelles, chacune des cartographies étant représentative de la teneur en phases amorphes (ou amorphicité) et en phases cristallines (ou cristallinité) de l'échantillon de matériau observé.

Dans un mode de réalisation, le procédé comporte la mise en œuvre de chacune des étapes 56 de calcul d'une cartographie d'énergie, 60 de calcul d'une cartographie de cohérence structurelle et 62 de calcul d'une cartographie d'orientations structurelles.

L'étape 56 comprend un calcul d'une valeur d'énergie du tenseur de structure en chaque point P du sous-ensemble du pavé de données normalisées.

Dans un mode de réalisation, l'étape 56 comporte d'abord un calcul des valeurs propres de la matrice de tenseur de structure associée au point P considéré.

Dans le cas où N=2, le tenseur de structure en chaque point P considéré est une matrice 2x2, qui comporte deux valeurs propres associées, qui sont calculées analytiquement.

Les valeurs propres du tenseur de structure associé au point P considéré sont notées respectivement $\lambda_1(p)$ et $\lambda_2(p)$.

Les valeurs propres permettent d'obtenir des informations sur la distribution du gradient dans la fenêtre w, et pour discriminer entre régions à gradient directionnel, régions uniformes ou régions à symétrie rotationnelle. Les valeurs propres sont mémorisées et peuvent être utilisées pour des calculs ultérieurs.

Le calcul d'une valeur d'énergie associée au tenseur de structure est effectué en appliquant la formule suivante :

$$E_p = |\lambda_1(p)| + |\lambda_2(p)|$$

L'énergie d'un tenseur de structure, définie comme la somme des valeurs absolues de ses valeurs propres caractérise la dynamique. L'énergie du tenseur en un point exprime le contraste local au voisinage de ce point. (J. Angulo. Structure Tensor Image Filtering using Riemannian L1 and L∞ Center-of-mass. Image Analysis and Stereology, vol. 33, no. 2, pp. 95-105, 2014.)

Si l'énergie est proche de 0, le point P appartient à une région homogène en termes de gradients structurels. Il n'y a pas de gradient marqué comme dans le cas d'une périodicité cristalline, donc la région est amorphe.

La valeur d'énergie associée au point considéré est mémorisée.

Les valeurs d'énergie en chaque point forment une cartographie d'énergie relative à l'échantillon de matériau observé et sont représentatives qualitativement de la teneur en phases amorphes de l'échantillon observé.. De manière inattendue, les simulations montrent que l'énergie est un excellent indicateur local de l'amorphicité. En effet, un milieu amorphe génère une image localement beaucoup plus isotrope et homogène que le cristal pour lequel l'alignement d'atomes génère un fort contraste local très orienté (des petites gouttes blanches sur fond noir) dans les images.

Pour réaliser une cartographie quantitative précise, une courbe de calibration théorique est utilisée, comme expliqué ci-après en référence à l'étape 58.

La cristallinité est calculée à partir de l'amorphicité, elle est égale à (1- l'amorphicité) dans le cas où il n'y a que des phases soit amorphes, soit cristallines. S'il existe d'autres types de phases (hypothétiques), alors il faut les soustraire du total.

La cartographie d'énergie obtenue à l'issue de l'étape 56 est par exemple mémorisée, affichée sur l'interface homme-machine et/ou transmise à un dispositif distant pour analyse automatique.

L'étape 60 de calcul d'une cartographie de cohérence structurelle comprend un calcul de la cohérence associée à chaque tenseur.

La cohérence est définie par la différence entre la valeur propre maximale et la valeur propre minimale divisée par la somme de la valeur propre maximale et de la valeur propre minimale. La cohérence est également appelée facteur de confiance ou indicateur de dispersion. La cohérence représente une mesure de l'anisotropie locale et caractérise la dispersion de l'orientation du gradient c'est-à-dire la variabilité locale de la géométrie de l'image.

Soit $\lambda_{max}(p)=\max(\lambda_1(p), \lambda_2(p))$ la valeur propre maximale et $\lambda_{min}(p)=\min(\lambda_1(p),\lambda_2(p))$ la valeur propre minimale, la formule pour calculer la cohérence est :

$$C_p = \frac{\lambda_{max}(p) - \lambda_{min}(p)}{\lambda_{max}(p) + \lambda_{min}(p)}$$

La valeur de cohérence associée au point considéré est mémorisée.

Les valeurs de cohérence calculées en chaque point forment une cartographie de cohérence structurelle, qui est par exemple mémorisée, affichée sur l'interface homme-machine et/ou transmise à un dispositif distant pour analyse automatique.

La cohérence permet également de représenter l'homogénéité des phases, un monocristal parfait étant représenté par une seule valeur de cohérence.

L'étape 62 de calcul d'une cartographie d'orientations comprend un calcul d'une orientation associée au point considéré, à partir des composantes du tenseur de structure. La méthode calcul de l'orientation est par exemple décrite dans la publication suivante : I. L. Dryden, A. Koloydenko and D. Zhou. Non-Euclidean Statistics for Covariance Matrices, with Applications to Diffusion Tensor Imaging. The Annals of Applied Statistics, vol. 3, no. 3, pp. 1102-1123, 2009.

La valeur d'orientation associée au point considéré est mémorisée et forme une cartographie des orientations de l'échantillon observé. La cartographie des orientations est par exemple affichée sur l'interface homme-machine et/ou transmise à un dispositif distant pour analyse automatique.

L'orientation donne une idée des alignements préférentiels des atomes dans la structure amorphe ou cristalline. Dans le cas d'un amorphe isotrope il n'y a pas de direction préférentielle et la distribution des angles est plate. Par contre pour un cristal la distribution est très étroite, et on obtient une orientation dominante des plans cristallins. L'orientation est directement liée à l'agencement spatial des atomes dans l'espace réel.

Le procédé comprend en outre une étape 58 d'évaluation de la teneur en phases amorphes et cristallines de l'échantillon de matériau observé. L'étape 58 comporte un calcul d'un paramètre statistique de la distribution des données à partir des données résultantes d'au moins une des étapes respectives de lissage 48, de calcul d'une cartographie d'énergie 56, de calcul d'une cartographie de cohérence structurelles 60, de calcul d'une cartographie d'orientations structurelles 62.

L'étape 58 comporte en outre une extraction d'une valeur de la teneur en phases amorphes (ou amorphicité) et/ou en phases cristallines (ou cristallinité) de l'échantillon de matériau observé en fonction d'une courbe de calibration bijective, qui met en relation bijective le paramètre statistique calculé et l'amorphicité (la teneur en phase amorphe)pour le matériau observé.

Selon un mode de réalisation, le paramètre statistique est le mode de la distribution statistique des valeurs d'énergie calculées précédemment, appelé mode d'énergie. En statistique, le mode, ou valeur dominante, est la valeur la plus représentée d'une variable quelconque dans une population donnée.

En pratique, de manière connue, le mode d'énergie est calculé à partir d'un histogramme des valeurs d'énergie calculées à partir des tenseurs de structure en chaque point du sous-ensemble de points considéré.

Il a été observé sur des exemples de mélanges théoriques que le mode d'énergie est lié, de manière non linéaire, à la teneur de phase amorphe dans un mélange.

Selon un autre mode de réalisation, le paramètre statistique est l'écart-type ou la médiane de la distribution statistique de données D considérée. D est un ensemble de valeurs (= l'intensité en chaque point du pavé de données) et la définition classique de l'écart type s'applique, à savoir la dispersion de D par rapport à leur moyenne.

Il est prévu de calculer préalablement les courbes de calibration théorique, calculée sur tous les points du pavé de données comportant des mélanges de teneur connue de phases amorphes et cristallines de matériaux choisis, associant des valeurs de teneur de phase amorphe aux divers paramètres statistiques du pavé de données pour un matériau donné, et de mémoriser la ou les courbes de calibration qui sont bijectives.

Par exemple, les courbes de calibration théoriques suivantes sont calculées : écart-type (orientation(D)), écart-type (H=orientation(D), S=cohérence(D), B=énergie(D)) ; écart-type (énergie(D)) ; médiane (orientation(D)) ; mode (pavé de données après lissage(D)) ; médiane (pavé de données après lissage(D)).

Des traitements par apprentissage machine permettent de trouver des courbes de calibration bijectives plus complexes de manière automatisée.

Dans un mode de réalisation, à l'étape 58, une des courbes de calibration théorique préalablement mémorisées, qui est bijective, est utilisée.

On peut choisir une courbe de calibration ou plusieurs courbes de calibration à titre de vérification. L'utilisation de toutes les courbes de calibration donne une idée de la dispersion des mesures. Dans le cas idéal, toutes les courbes de calibration devraient donner exactement le même résultat. En pratique, en cas de désaccord entre tous les résultats obtenus pour chaque courbe de calibration, on choisit le résultat médian.

Par exemple, la courbe de calibration utilisée est la courbe Ecart-type (énergie(D)), le paramètre écart-type de la cartographie d'énergie 25 est calculé, et la teneur de phase amorphe est évaluée en utilisant la courbe de calibration théorique.

La teneur en phase amorphe (resp.en phase cristalline) est par exemple exprimée en fraction ou en pourcentage.

Les résultats obtenus aux étapes 52 et 58 pour un échantillon de matériau observé permettent d'alimenter continuellement la base de connaissance 14 afin d'améliorer la reconnaissance automatisée des phases cristallines et amorphes.

Les figures 3 à 9 illustrent à titre d'exemple des données intermédiaires et des résultats du procédé de traitement de données multidimensionnelles décrit ci-dessus, sous forme d'images en niveaux de gris (pavés de données avec N=2).

A titre d'exemple, la figure 3 illustre une série d'images $I_1$ à $I_8$ HRSTEM-HAADF montrant la nucléation de nanoparticules de platine (données extraites de Dachraoui, W., Henninen, T.R., Keller, D. et al. Multi-step atomic mechanism of platinum nanocrystals nucleation and growth revealed by in-situ liquid cell STEM. Sci Rep 11, 23965 (2021)). Les images I1 à I8 sont des pavés de données d'entrée.

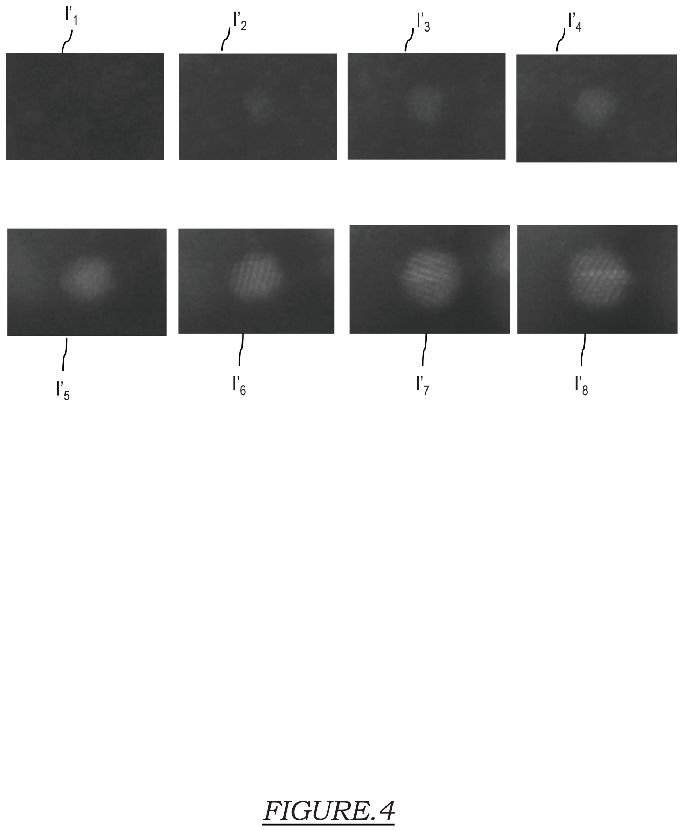

En figure 4, on observe les pavés de données débruités $I'_1$ à $I'_8$ correspondant aux pavés de données d'entrée $I_1$ à $I_8$, par application d'un filtre HBSG de (ici de 17 pixels x 17 pixels).

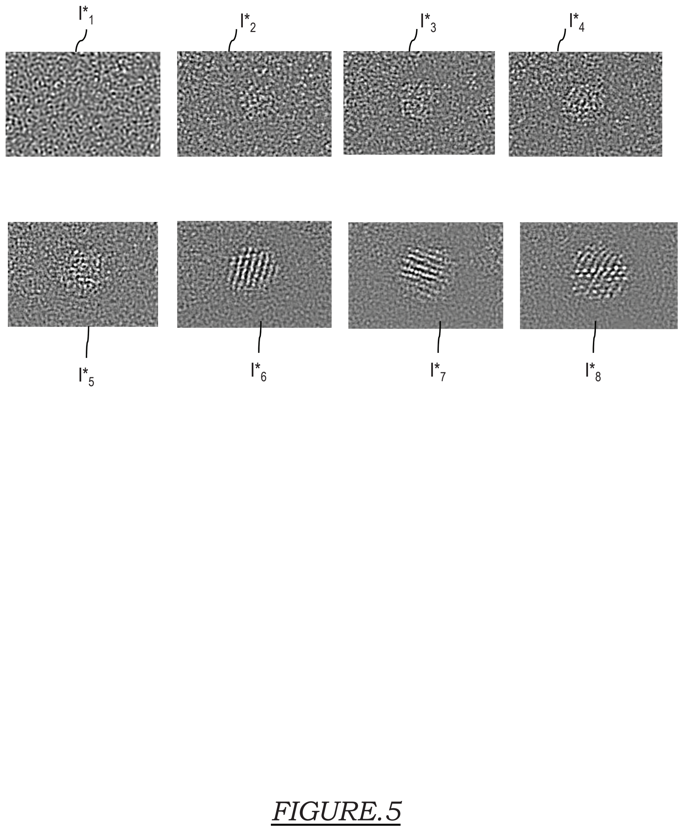

Les images correspondant aux mêmes pavés de données après normalisation locale « Sage » notés I*1 à I*8 sont illustrées à la figure 5.

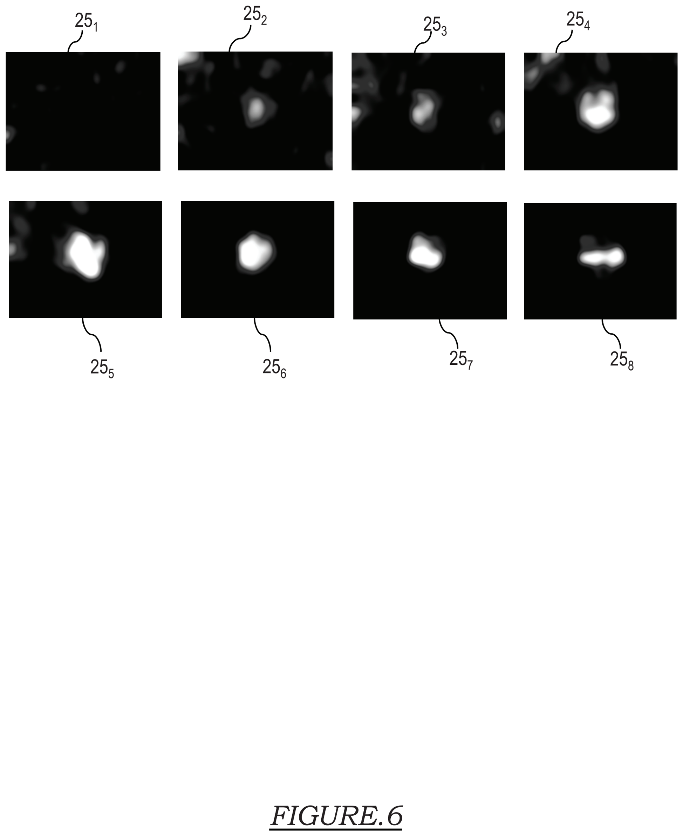

La figure 6 illustre les cartographies d'amorphicité qualitative $25_1$ à $25_8$ correspondant aux pavés de données $I_1$ à $I_8$ d'exemple de la figure 3, après application des étapes 40 à 56 du procédé de traitement décrites ci-dessus. Dans cette figure, les zones sombres sont des zones amorphes et les zones claires sont des zones cristallines.

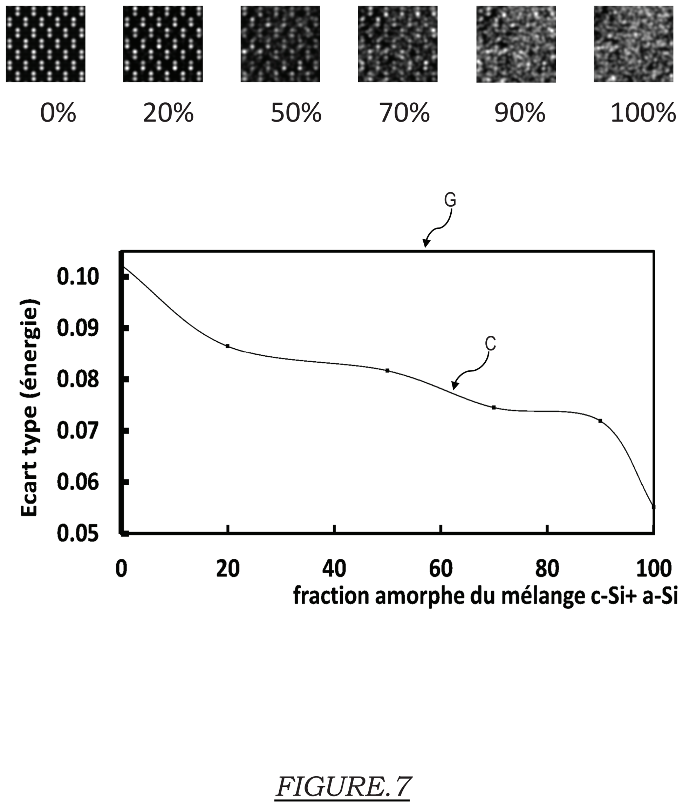

La figure 7 représente un graphe G représentant l'écart-type de la cartographie d'énergie (en ordonnée) en fonction du pourcentage d'amorphe (en abscisse), la courbe théorique C étant représentative d'un mélange de silicium cristallin c-Si et d'amorphe a-Si. Les icones représentées au-dessus du graphe G illustrent la structure observée selon le pourcentage, représentatif de l'amorphicité, entre 0% et 100%.

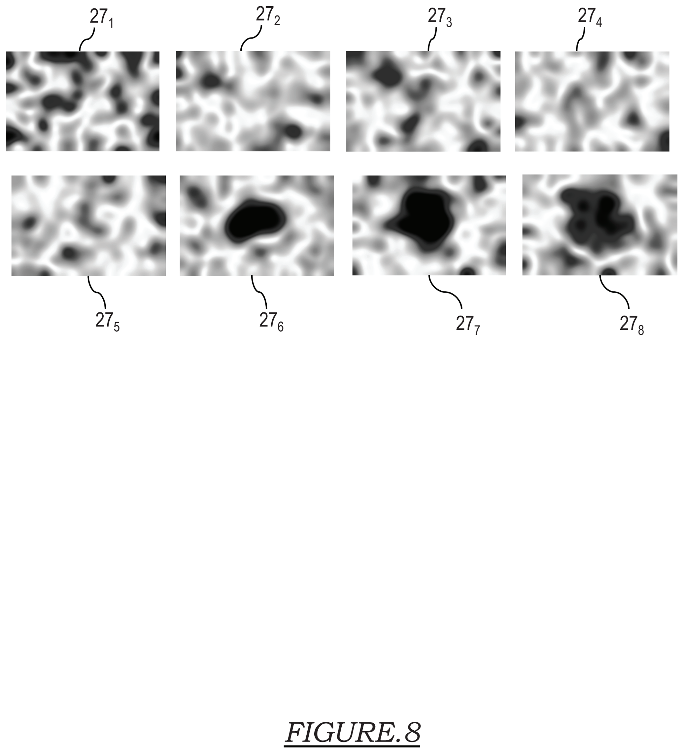

La figure 8 représente les cartographies de cohérence structurelles $27_1$ à $27_8$ correspondant aux pavés de données $I_1$ à $I_8$ d'exemple de la figure 3, après application des étapes 40 à 50 et 60 du procédé de traitement décrites ci-dessus. Dans cette figure, les zones sombres sont des zones cohérentes, correspondant aux zones cristallines et les zones claires sont des zones peu cohérentes, correspondant à des phases amorphes.

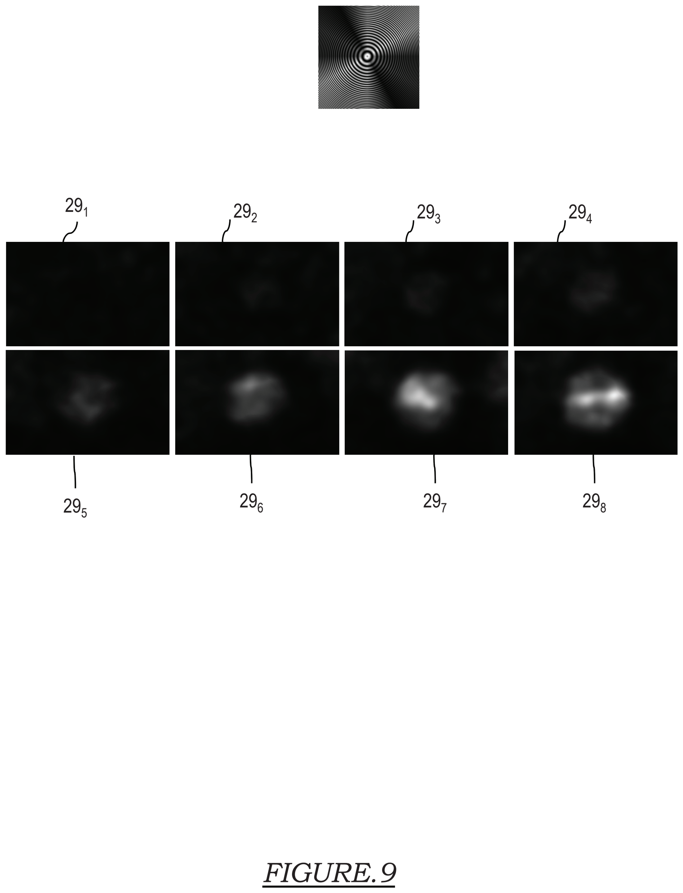

La figure 9 représente les cartographies d'orientations $29_1$ à $29_8$ correspondant aux pavés de données $I_1$ à $I_8$ d'exemple de la figure 3, après application des étapes 40 à 50 et 62 du procédé de traitement décrites ci-dessus.

Dans ces images codées en mode HSB (pour « Hue Saturation Brightness ») ou TSL en français pour « Teinte Saturation Luminosité »), la teinte représente l'orientation, la saturation représente la cohérence et la luminosité (ou brillance) représente l'énergie.

La cible en haut permet de faire le lien entre la couleur et l'orientation des lignes. Quand les lignes sont orientées en diagonale avec un angle polaire de 30 ° environ (en bas à droite de la cible) alors la couleur est sombre. Quand l'orientation des lignes est proche d'un angle polaire de 100 ° environ (en haut à droite de la cible), alors la couleur est claire. Ces figures doivent normalement se lire avec des couleurs pour plus de précision, mais l'idée générale peut se comprendre avec cette illustration.

Les zones cristallines sont des zones fortement orientées en termes de plans cristallins, donc l'orientation est représentée par des valeurs angulaires représentatives de la direction de ces plans cristallins

Dans le cas de l'amorphe, le voisinage de chaque extremum local est quasiment isotrope, donc il n'y a pas de couleur qui soit dominante et étendue.

Avantageusement, la représentation en mode TSL (ou HSB en anglais) telle que définie ci-dessus permet de réunir en chaque image les caractéristiques d'orientation, de cohérence et d'énergie calculées. Dans cette représentation, l'écart-type des images est représentatif de l'amorphicité : l'écart-type est une bijection en fonction de l'amorphicité. Une telle bijection est qualifiée par des simulations atomistiques au cas par cas pour une quantification précise de la phase amorphe.

Avantageusement, le procédé proposé permet de cartographier les phases amorphes et cristallines à l'échelle atomique, et à partir d'une seule acquisition de haute résolution d'un pave de données multidimensionnelles représentatives de l'échantillon de matériau observé.

De plus, le procédé proposé permet avantageusement d'évaluer la teneur en phase amorphe et/ou cristalline dans un échantillon de matériau observé ou dans toute partie de l'échantillon de matériau observé. Ainsi, avantageusement, le procédé proposé permet de quantifier l'amorphicité de l'échantillon de matériau observé, et de cartographier son énergie, son orientation et sa cohérence structurelle. La combinaison de l'énergie, de la cohérence et de l'orientation permet d'obtenir une représentation combinée dans l'analyse qualitative de la structure. Les simulations atomistiques permettent de calibrer quantitativement l'amorphicité en fonction des valeurs du pavé de données obtenu après l'étape de lissage, et/ou des cartographies obtenues par calcul des valeurs d'énergie, de cohérence et d'orientation des tenseurs de structure.

**Revendications**

1. Procédé de traitement de données multidimensionnelles de microscopie représentatives d'un échantillon de matériau pour cartographier un mélange de phases amorphes et cristallines dans ledit échantillon de matériau, comportant une obtention d'au moins une image de microscopie formant un pavé de données d'entrée, la ou chaque image dudit pavé de données d'entrée étant représentative d'une partie dudit l'échantillon, ledit pavé de données d'entrée étant représenté dans un espace à N dimensions, N étant supérieur ou égal à deux, chaque donnée dudit pavé correspondant à un point de l'espace à N dimensions, le procédé étant **caractérisé en ce qu'**il comporte des étapes, mises en œuvre par un processeur d'un dispositif électronique programmable, de :

- débruitage (44) du pavé de données d'entrée par application d'un filtrage audit pavé de données d'entrée pour obtenir un pavé de données débruitées,
- normalisation (46) du pavé de données débruitées pour obtenir un pavé de données normalisées, la normalisation comportant un ajustement d'un contraste local du pavé de données débruitées entre une valeur minimale et une valeur maximale prédéterminées ;
- lissage (48) du pavé de données débruitées avant ou après normalisation,
- en au moins un sous-ensemble de points dudit pavé de données normalisées, calcul d'un tenseur de structure (50) fonction des valeurs de gradients directionnels, autour de chaque point dudit sous-ensemble du pavé données normalisées,
- calcul (52) d'au moins une cartographie (25, 27, 29) des phases amorphes et des phases cristallines de l'échantillon de matériau observé en fonction d'au moins une caractéristique des tenseurs de structure calculés.

2. Procédé selon la revendication 1, dans lequel le calcul (52) d'au moins une cartographie comporte un calcul (56) d'une valeur d'énergie du tenseur de structure en chaque point dudit sous-ensemble du pavé de données normalisées, lesdites valeurs d'énergie du tenseur de structure formant une cartographie d'énergie (25, $25_1$,..., $25_8$).

3. Procédé selon l'une quelconque des revendications 1 ou 2, dans lequel le calcul (52) d'au moins une cartographie comporte un calcul (60) d'une valeur de cohérence du tenseur de structure en chaque point dudit sous-ensemble du pavé données normalisées, et une formation d'une cartographie (27, $27_1$,...,$27_8$) de cohérence structurelle de l'échantillon observé.

4. Procédé selon l'une quelconque des revendications 1 à 3, dans lequel le calcul (52) d'au moins une cartographie comporte un calcul (62) d'une valeur d'orientation en chaque point à partir du tenseur de structure associé audit point, l'orientation étant calculée à partir de composantes dudit tenseur de structure et une formation d'une cartographie (29, $29_1$,...,$29_8$) d'orientations structurelles de l'échantillon observé.

5. Procédé selon l'une des revendications 1 à 4, comportant en outre une évaluation (58) quantitative d'une teneur de phase(s) amorphe(s) et/ou cristallines dans au moins une partie de l'échantillon observé, comportant un calcul d'un paramètre statistique à partir du pavé de données normalisées lissées ou à partir d'au moins une des cartographies des phases amorphes et des phases cristallines de l'échantillon (25,27, 29) de matériau observé, et une extraction d'une valeur de la teneur en phases amorphes de l'échantillon de matériau observé en fonction d'une courbe de calibration bijective, qui met en relation bijective le paramètre statistique calculé et ladite teneur en phases amorphes du matériau observé.

6. Procédé selon la revendication 5, dans lequel ledit paramètre statistique est choisi parmi les paramètres statistiques suivants: {mode, médiane, écart-type}.

7. Procédé selon l'une quelconque des revendications 5 ou 6, dans lequel lesdites courbes de calibration bijective sont calculées et mémorisées préalablement.

8. Procédé selon l'une quelconque des revendications 1 à 7, dans lequel le calcul d'au moins une cartographie comporte le calcul d'une valeur d'énergie et le calcul d'une valeur de cohérence et le calcul d'une valeur d'orientation du tenseur de structure en chaque point dudit sous-ensemble du pavé de données normalisées, le procédé comportant en outre une représentation des valeurs d'énergie, de cohérence et d'orientation calculées par une image représentée en mode « Teinte Saturation Luminosité », dans laquelle les valeurs de teinte sont les valeurs d'orientation calculées, les valeurs de saturation sont les valeurs de cohérence calculées et les valeurs de luminosité sont les valeurs d'énergie calculées.

9. Procédé selon l'une quelconque des revendications 1 à 8, dans lequel l'étape de débruitage (44) comporte l'application d'un filtrage à noyau de taille prédéterminée.

10. Procédé selon la revendication 9, dans lequel ledit filtrage à noyau comporte une convolution par un filtre HBSG de noyau carré.

**11.** Programme d'ordinateur comportant des instructions logicielles qui, lorsqu'elles sont exécutées par un dispositif électronique programmable, mettent en œuvre un procédé de traitement de données multidimensionnelles représentatives d'un échantillon de matériau pour cartographier un mélange de phases amorphes et cristallines dans ledit échantillon de matériau conforme aux revendications 1 à 10.

**12.** Dispositif de traitement de données multidimensionnelles de microscopie représentatives d'un échantillon de matériau pour cartographier un mélange de phases amorphes et cristallines dans ledit échantillon de matériau pour cartographier un mélange de phases amorphes et cristallines dans ledit échantillon de matériau, configuré pour mettre en œuvre un module (18) d'obtention d'au moins une image de microscopie formant un pavé de données d'entrée, la ou chaque image dudit pavé de données d'entrée étant représentative d'une partie dudit l'échantillon, ledit pavé de données d'entrée étant représenté dans un espace à N dimensions, N étant supérieur ou égal à deux, chaque donnée dudit pavé correspondant à un point de l'espace à N dimensions, le dispositif étant un dispositif électronique programmable **caractérisé en ce qu'**il comporte un processeur (8) configuré pour exécuter :

- un module de débruitage (18) du pavé de données d'entrée par application d'un filtrage audit pavé de données d'entrée pour obtenir un pavé de données débruitées,
- un module de normalisation (20) du pavé de données débruitées pour obtenir un pavé de données normalisées, la normalisation comportant un ajustement d'un contraste local du pavé de données débruitées entre une valeur minimale et une valeur maximale prédéterminées ;
- un module de lissage du pavé de données débruitées avant ou après normalisation,
- en au moins un sous-ensemble de points dudit pavé de données normalisées, un module (22) de calcul d'un tenseur de structure fonction des valeurs de gradients directionnels, autour de chaque point dudit sous-ensemble du pavé données normalisées,
- un module (24) de calcul d'au moins une cartographie (25, 27, 29) des phases amorphes et des phases cristallines de l'échantillon de matériau observé en fonction d'au moins une caractéristique des tenseurs de structure calculés.

**13.** Dispositif de traitement de données multidimensionnelles selon la revendication 12, comportant en outre un module (32) d'évaluation d'une teneur en phases amorphes et/ou en phases cristallines du matériau observé.

*FIGURE. 1*

*FIGURE.2*

*FIGURE.3*

I'$_1$   I'$_2$   I'$_3$   I'$_4$

I'$_5$   I'$_6$   I'$_7$   I'$_8$

*FIGURE.4*

FIGURE.5

*FIGURE.6*

FIGURE.7

FIGURE.8

*FIGURE.9*

**RAPPORT DE RECHERCHE EUROPEENNE**

Numéro de la demande

EP 25 21 5771

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | EP 4 303 811 A1 (COMMISSARIAT ENERGIE ATOMIQUE [FR]) 10 janvier 2024 (2024-01-10) * alinéas [0037] - [0110]; figure 1 * ----- | 1-13 | INV. G06T7/00 |
| A | DENNLER NIK ET AL: "Learning-based defect recognition for quasi-periodic HRSTEM images", MICRON, PERGAMON, OXFORD, GB, vol. 146, 3 mai 2021 (2021-05-03), XP086580044, ISSN: 0968-4328, DOI: 10.1016/J.MICRON.2021.103069 [extrait le 2021-05-03] * le document en entier * ----- | 1-13 | |
| A,D | J. ANGULO: "Structure Tensor Image Filtering using Riemannian L 1 and Loo Center-of-mass", IMAGE ANALYSIS AND STEREOLOGY, vol. 33, no. 2, 2014, pages 95-105, XP002813387, * abrégé * ----- | 1-13 | |

**DOMAINES TECHNIQUES RECHERCHES (IPC)**

G06T
G01N

Le présent rapport a été établi pour toutes les revendications

| Lieu de la recherche | Date d'achèvement de la recherche | Examinateur |
|---|---|---|
| La Haye | 18 novembre 2025 | Gilow, Christoph |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 25 21 5771

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-11-2025

| Document brevet cité au rapport de recherche | | Date de publication | Membre(s) de la famille de brevet(s) | | Date de publication |
|---|---|---|---|---|---|
| EP 4303811 | A1 | 10-01-2024 | EP | 4303811 A1 | 10-01-2024 |
| | | | FR | 3137777 A1 | 12-01-2024 |

Pour tout renseignement concernant cette annexe : voir Journal Officiel de l'Office européen des brevets, No.12/82

EPO FORM P0460

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3118256

**Littérature non-brevet citée dans la description**

- **N. DAGHBOUJ et al.** *Journal of Nuclear Materials*, 2023, vol. 584, 154543, https://doi.org/10.1016/j.jnucmat.2023.154543
- **B. PUTZ et al.** *Materials & Design*, 2022, vol. 218, 110675, https://doi.org/10.1016/j.mat-des.2022.110675
- **D. SAGE** ; **M. UNSER**. *Easy Java Programming for Teaching Image Processing Proceedings of the IEEE International Conference on Image Processing (ICIP'01)*, 2001

- **J. ANGULO**. Structure Tensor Image Filtering using Riemannian L1 and L∞ Center-of-mass. *Image Analysis and Stereology*, 2014, vol. 33 (2), 95-105
- **I. L. DRYDEN** ; **A. KOLOYDENKO** ; **D. ZHOU**. Non-Euclidean Statistics for Covariance Matrices, with Applications to Diffusion Tensor Imaging. *The Annals of Applied Statistics*, 2009, vol. 3 (3), 1102-1123
- **DACHRAOUI, W.** ; **HENNINEN, T.R.** ; **KELLER, D. et al.** Multi-step atomic mechanism of platinum nanocrystals nucleation and growth revealed by in-situ liquid cell STEM. *Sci Rep*, 2021, vol. 11, 23965